# EUROPÄISCHE PATENTANMELDUNG

(11) **EP 3 978 448 A1**
(43) Veröffentlichungstag der Anmeldung: **06.04.2022**
(21) Anmeldenummer: 21194105.9
(22) Anmeldetag: 31.08.2021
(51) Int. Cl.: C02F 3/32, C02F 1/30, A01G 33/00, C12M 1/00, C02F 3/30, C02F 11/06, C02F 1/02

(54) **TECHNISCHE ANLAGE ZUR INDUSTRIELLEN ZUCHT DER ALGE CLADOPHORA GLOMERATA SOWIE DEREN VERWENDUNG**

(30) Priorität: 30.09.2020 DE 102020125591
(71) Anmelder: swb Erzeugung AG & Co. KG, 28215 Bremen (DE)
(72) Erfinder: Fretzer, Sarah, 27721 Ritterhude (DE)
(74) Vertreter: Wasiljeff, Johannes M.B.

(57) **Zusammenfassung**

Die Erfindung betrifft eine technische Anlage zur industriellen Zucht der Alge Cladophora glomerata (11) mit einem Wasserkreislauf (12) mit wenigstens einem mit Wasser befüllten Wasserbecken (14), vorzugsweise einem Betonbecken, in dem die Alge Cladophora glomerata (11) gezüchtet wird und das einen Wasserzufluss (16) und einen Wasserabfluss (18) aufweist. Der Wasserkreislauf (14) weist eine Zulaufeinrichtung (22) mit einem absperrbaren Zulauf (24), eine Ablaufeinrichtung (26) mit einem absperrbaren Ablauf (28) und einen Rücklauf (20) auf, der den Wasserabfluss (18) mit dem Wasserzufluss (16) verbindet und der eine Pumpe (30) aufweist, mittels der eine Strömung des Wassers im Wasserbecken (14) erzeugt wird. Ferner weist die technische Anlage eine Beleuchtungseinrichtung (34) zur photosynthetisch aktive Beleuchtung des Bodens des Wasserbeckens (14) auf.

Ferner betrifft die Erfindung Verwendungen dieser technischen Anlage (10) zur Abwasserreinigung, zur Entsorgung von Brüdenkondensat, zur Reinigung von Klärschlammasche, zur Phosphorrückgewinnung und/oder zur Biogasproduktion sowie die Verwendung der Alge Cladophora glomerata zur Abwasserreinigung.

## Beschreibung

Die Erfindung betrifft eine technische Anlage zur industriellen Zucht der Alge Cladophora glomerata gemäß dem Oberbegriff von Anspruch 1 sowie Verwendungen dieser Anlage zur Abwasserreinigung, zur Entsorgung von Brüdenkondensat, zur Reinigung von Klärschlammasche, zur Phosphorrückgewinnung und/oder zur Biogasproduktion gemäß den Ansprüchen 10, 12, 13, 14 und 15 sowie Verwendung der Alge Cladophora glomerata zur Abwasserreinigung gemäß Anspruch 19.

Die Erfindung befasst sich mit der industriellen Zucht der Alge Cladophora glomerata und deren Verwendung auf dem Gebiet des Umweltschutzes und der erneuerbaren Energien.

In heutigen industriellen Prozessen fallen vielfach belastete Substanzen an, wobei belastetes Abwasser verschiedenen Ursprungs, Klärschlamm, Gärreste usw. anfallen, die entweder aufwändig entsorgt oder anderweitig verwendet werden müssen.

Die Erfindung hat sich zum Ziel gesetzt, diese belasteten Substanzen sinnvoll zu nutzen. Der Erfindung liegt daher die Aufgabe zugrunde, Mittel bereitzustellen, damit belastete Substanzen einer nachhaltigen, ökologisch und ökonomisch sinnvollen Verwendung zugeführt werden können.

Die Erfindung löst diese Aufgabe mit den Merkmalen einer technischen Anlage zur industriellen Zucht der Alge Cladophora glomerata gemäß Anspruch 1 sowie Verwendungen dieser Anlage zur Abwasserreinigung, zur Entsorgung von Brüdenkondensat, zur Reinigung von Klärschlammasche, zur Phosphorrückgewinnung und/oder zur Biogasproduktion gemäß den Ansprüchen 10, 12, 13, 14 und 15 sowie der Verwendung der Alge Cladophora glomerata zur Abwasserreinigung gemäß Anspruch 19.

Die erfindungsgemäße technische Anlage zur industriellen Zucht der Alge Cladophora glomerata weist einen Wasserkreislauf mit wenigstens einem mit Wasser befüllten Wasserbecken auf, vorzugsweise einem Betonbecken, in dem die Alge Cladophora glomerata gezüchtet wird und das einen Wasserzufluss und einen Wasserabfluss aufweist.

Der Wasserkreislauf weist eine Zulaufeinrichtung mit einem absperrbaren Zulauf, eine Ablaufeinrichtung mit einem absperrbaren Ablauf und einen Rücklauf auf, der den Wasserabfluss mit dem Wasserzufluss verbindet und der eine Pumpe aufweist, mittels der eine, vorzugsweise turbulente, Strömung des Wassers im Wasserbecken, vorzugsweise mit einer Geschwindigkeit von 0,1-0,5 m/s, erzeugt wird.

Ferner weist die Anlage eine Beleuchtungseinrichtung zur photosynthetisch aktiven Beleuchtung des Bodens des Wasserbeckens auf. Die Beleuchtungseinrichtung kann bspw. LED-Leuchten aufweisen. Die Beleuchtungseinrichtung kann oberhalb der Wasseroberfläche und/oder unterhalb der Wasseroberfläche angeordnet sein. Eine Anbringung oberhalb der Wasseroberfläche ist vorteilhaft, da dann ein geringerer Aufwand im Hinblick auf Nässeschutz ausreichend ist. Eine Anbringung unterhalb der Wasseroberfläche, d.h. im Wasser, ist vorteilhaft, da im Wesentlichen das gesamte emittierte Licht an die Alge Cladophora glomerata gelangen kann und kein Licht an der Wasseroberfläche durch Reflexion ungenutzt bleibt.

Die Erfindung schafft somit auf vorteilhafte Weise ideale Bedingungen für die Zucht der Alge Cladophora glomerata. Der Wasserkreislauf sorgt i.V.m. der Hinzufügung belasteter Substanzen dafür, dass andere Algen absterben bzw. gar nicht erst entstehen und sich in der Anlage die Alge Cladophora glomerata durchsetzt. Dies schafft definierte Bedingungen bei der Algenzucht und der Behandlung belasteter Substanzen.

Die Erfindung hat erkannt, dass die Alge Cladophora glomerata günstige Eigenschaften zur Behandlung belasteter Substanzen aufweist, insbesondere die Fähigkeit hat, für die Umwelt und den Menschen problematische Stoffe, wie Phosphor, Nickel, Blei, Cadmium und Kupfer aus der Umgebung der Alge Cladophora glomerata aufzunehmen.

Die Erfindung hat ferner erkannt, dass die Alge Cladophora glomerata auf porösen Oberflächen, wie Beton, gute Bedingungen zum Anwachsen findet. Vorzugsweise ist daher das Wasserbecken zur Aufzucht der Alge ein Betonbecken. Alternativ können aber auch andere Materialien mit einer porösen Oberfläche zum Einsatz kommen. Außerdem können auch glatte Materialien verwendet werden, die partiell porös gemacht werden, bspw. durch Einbringen oder Aufbringen, insbesondere Aufkleben, von Folien mit porösen Oberflächen oder Matten mit rauer oder bürstenartiger Struktur.

Vorliegend ist der Begriff "Wasserbecken" nicht eingeschränkt auf bestimmte Abmessungen im Hinblick auf Länge, Breite und/oder Höhe, so dass auch schmale Geometrien, wie Rinnen, Wasserbecken darstellen.

Die Erfindung hat ferner erkannt, dass die Alge Cladophora glomerata besonders gut wächst, wenn sie von einer turbulenten Strömung mit einer Geschwindigkeit von etwa 0,1-0,5 m/s umgeben ist.

Ferner hat die Erfindung erkannt, dass die Alge Cladophora glomerata besonders gut gedeiht, wenn sie einer photosynthetisch aktiven Beleuchtung vorzugsweise mit einer Beleuchtungsstärke von 3.000-9.000 Lux beleuchtet wird.

Über die Zulaufeinrichtung mit einem absperrbaren Zulauf wird Wasser, insbesondere belastetes Wasser, dem Wasserkreislauf zugeführt. Über eine Ablaufeinrichtung mit absperrbarem Ablauf kann das Wasser wieder aus dem Wasserkreislauf abgeführt werden. Der Zulauf und/oder Ablauf können aber auch in einer solchen Weise geöffnet werden, dass permanent eine gewisse Menge an Wasser zu läuft sowie abläuft. Zudem können der Zulauf und/oder Ablauf derart gesteuert werden, dass die Menge von Wasser im Wasserkreislauf erhöht oder vermindert wird, um den Pegel im Wasserbecken zu verändern.

Gemäß einer Weiterbildung der Erfindung sind dreidimensionale Strukturen, bspw. pyramidenstumpfförmige Strukturen, am Boden des Wasserbeckens vorgesehen. Derartige dreidimensionale Strukturen bilden künstliche Steinformationen. Sie sorgen für Wirbel in der Strömung und tragen dazu bei, dass die Strömung eine turbulente Strömung ist.

Außerdem dienen die dreidimensionalen Strukturen dazu, Bereiche mit unterschiedlichen Wassertiefen bereitzustellen, an denen die Alge in verschiedenen Höhen anwachsen kann. Die Alge Cladophora glomerata bildet in einer Wasserströmung Fäden, die sich in Strömungsrichtung ausdehnen. Dank Anwachspunkten in unterschiedlichen Höhen entlang der dreidimensionalen Strukturen bildet sich somit ein sich dreidimensional erstreckendes Gebilde der Alge Cladophora glomerata.

Soweit die Anlage zur Reinigung von Asche aus einer Klärschlammverbrennung verwendet wird, dienen die dreidimensionalen Strukturen zudem dazu, die Asche zwischen den dreidimensionalen Strukturen gegen die Strömung zu sichern, so dass die Asche im Wesentlichen ortsfest verbleibt und nicht zum Wasserabfluss gespült wird.

Gleichwohl kann die Asche zwischen den dreidimensionalen Strukturen nicht nur eingebracht, sondern wieder entfernt werden, was ein Auswechseln der Asche erlaubt, während zugleich die an den dreidimensionalen Strukturen angewachsene Alge Cladophora glomerata erhalten bleibt.

Eine Weiterbildung der Erfindung sieht vor, dass die maximale Wassertiefe im Wasserbecken 15-30 cm oder, insbesondere bei klarem Wasser, 15-50 cm beträgt. Diese Wassertiefen sind vorteilhaft im Hinblick auf eine günstige Beleuchtung der Alge Cladophora glomerata auch bei sich eintrübendem Wasser. Durch die begrenzte Wassertiefe kann das Licht der Beleuchtungseinrichtung die Alge Cladophora glomerata stets ausreichend beleuchten, so dass das Wachstum der Alge optimiert wird.

Gemäß einer Weiterbildung der Erfindung ist eine Steuereinrichtung zur Steuerung der Zulaufeinrichtung und/oder Ablaufeinrichtung derart vorgesehen, dass die Wassertiefe im Wasserbecken in Abhängigkeit von der Trübung des Wassers gesteuert wird. Dies ist vorteilhaft, um gute Bedingungen für das Wachstum der Alge Cladophora glomerata bereitzustellen.

Eine Weiterbildung der Erfindung sieht vor, dass die Beleuchtungseinrichtung variabel einstellbar ist und von der Steuereinrichtung derart gesteuert werden kann, dass die Beleuchtungsstärke am Boden des Wasserbeckens auf Werte zwischen 3.000 Lux und 9.000 Lux einstellbar ist. Die Beleuchtungsstärke kann somit gleichmäßig gesteuert bzw. geregelt werden, auch wenn die Wassertrübung variiert.

Gemäß einer Weiterbildung der Erfindung weist das Wasserbecken einer Abdeckung auf. Das Wasser im Wasserbecken ist somit von der Umwelt abgeschottet, so dass die Temperatur im Wasserbecken im Wesentlichen gleichmäßig gehalten werden kann.

Vorzugsweise wird die Temperatur im Wasserbecken im Bereich zwischen 15 °C und 25 °C gehalten.

Eine Weiterbildung der Erfindung sieht vor, dass das Wasserbecken eine Heizeinrichtung zum Beheizen des Wassers aufweist. Somit wird auf vorteilhafte Weise gewährleistet, dass auch im Winter Wassertemperaturen im Bereich zwischen 15 °C und 25 °C bereitgestellt werden. Dies gewährleistet gleichmäßig gute Wachstumsbedingungen auch während jahreszeitlich bedingter Temperaturschwankungen.

Gemäß einer Weiterbildung der Erfindung sind mehrere Wasserbecken übereinander aufgebaut. Somit kann auf vorteilhafte Weise auch bei geringem Platzangebot eine Algenzuchtanlage mit hoher Kapazität bereitgestellt werden.

Eine Weiterbildung der Erfindung sieht vor, dass am Wasserabfluss des bzw. jedes Wasserbeckens ein Auffangbecken mit einem Sieb angeordnet ist, auf dem sich lose treibende Algen ansammeln. Somit wird ein unkontrollierter Abfluss von Algen verhindert, die sich bspw. in der Umwälzpumpe verfangen könnten.

Bevorzugt befindet sich am Wasserabfluss eine verschließbare Luke. Im Falle einer Reinigung des Siebes wird diese Luke verschlossen, so dass der Wasserfluss unterbrochen wird und der Wasserabfluss trocken fällt. Hierdurch wird die Reinigung des Siebes erleichtert.

Zusätzlich oder alternativ kann am Wasserzufluss eine verschließbare Luke vorgesehen sein. Durch Verschließen dieser Luke werden etwaig erforderliche Reinigungsarbeiten an der technischen Anlage, insbesondere des Wasserbeckens, erleichtert.

Eine erfindungsgemäße Verwendung der erfindungsgemäßen technischen Anlage sieht die Verwendung dieser Anlage zur Abwasserreinigung in Kläranlagen vor, wobei über die Zulaufeinrichtung zu klärendes Abwasser zugeführt wird. Mittels der erfindungsgemäßen technischen Anlage sorgt die Alge Cladophora glomerata für einen CSB-Abbau, d.h. einen Abbau des chemischen Sauerstoffbedarfs. Hierbei handelt es sich um einen Summenparameter, der als Maß für die Summe aller im Wasser vorhandenen und oxidierbaren Stoffe dient. Dieser Parameter dient zur Beurteilung für Schadstoffe, die ins Abwasser abgegeben oder in einem Zeitraum entsorgt wurden.

Darüber hinaus sorgt die Alge Cladophora glomerata für einen Abbau von Medikamentenrückständen im Wasser.

Gemäß einer Weiterbildung der Erfindung wird die technische Anlage als weitere Reinigungsstufe einer mehrstufigen Kläranlage verwendet, bspw. einer Kläranlage mit einer mechanischen Reinigungsstufe, einer biologischen Reinigungsstufe ohne gezielte Entfernung von Nährstoffen, wie Phosphaten und Stickstoff, und/oder einer weiteren biologischen Reinigungsstufe mit gezielter Entfernung derartiger Nährstoffe. Die erfindungsgemäße technische Anlage wird somit auf vorteilhafte Weise zur Verbesserung bestehender Kläranlagen verwendet.

Eine weitere erfindungsgemäße Verwendung der erfindungsgemäßen technischen Anlage sieht die Verwendung dieser Anlage zur Entsorgung von Brüdenkondensat vor, das aus der Klärschlammverwertung stammt, wobei das Brüdenkondensat pur oder verdünnt dem Wasserbecken direkt oder indirekt zugeführt wird.

Brüdenkondensat entsteht bei der Trocknung von Klärschlamm. Bei der Trocknung von Klärschlamm entsteht zunächst eine mit Wasserdampf gesättigte Abluft. Diese Abluft wird Brüden genannt. Im Brüden sind Schadstoffe, wie Staub, organische Verbindungen und Ammoniak enthalten. Der Brüden sollte daher nicht ohne weitere Behandlung in die Umwelt gelangen. In vielen Fällen wird der Brüden kondensiert. Dabei entstehen das genannte Brüdenkondensat und ein Restbrüden. In Abhängigkeit der Kondensationstemperatur sammelt sich ein Großteil der Schadstoffe aus der Abluft im Brüdenkondensat.

Es ist erforderlich, dass das Brüdenkondensat den jeweiligen Vorschriften des örtlichen Abwasserverbandes genügt, bevor das Brüdenkondensat in eine öffentliche Abwasserbehandlungsanlage eingeleitet werden darf. Dies macht in der Regel eine aufwändige Reinigung des Brüdenkondensats erforderlich, in dem die im Brüdenkondensat enthaltenen Schadstoffe weitgehend entfernt werden. Die Erfindung ermöglicht durch den Einsatz der Alge Cladophora glomerata in der erfindungsgemäßen technischen Anlage eine derartige Reinigung auf effiziente und umweltschonende Weise.

Eine weitere erfindungsgemäße Verwendung der erfindungsgemäßen technischen Anlage sieht die Verwendung dieser Anlage zur Reinigung von KIärschlammasche vor, die bei der Verbrennung von Klärschlamm entsteht, wobei die Klärschlammasche in das Wasserbecken gegeben wird. Die Klärschlammasche dient dabei als Dünger für die Alge Cladophora glomerata. Die Klärschlammasche wird dabei zumindest teilweise von Nährstoffen und Schadstoffen befreit. Zudem dient die Klärschlammasche als Substrat für das Algenwachstum. Die Alge Cladophora glomerata kann zudem an der Klärschlammasche anwachsen. Insgesamt ist Klärschlammasche daher sehr förderlich für das Wachstum der Alge Cladophora glomerata.

Eine weitere erfindungsgemäße Verwendung der erfindungsgemäßen technischen Anlage sieht die Verwendung dieser Anlage zur Phosphorrückgewinnung aus Klärschlammasche vor, die bei der Verbrennung von Klärschlamm entsteht, wobei die Klärschlammasche in das Wasserbecken gegeben wird. Die Erfindung hat nämlich erkannt, dass die Alge Cladophora glomerata in der Lage ist, Phosphor aus der Klärschlammasche aufzunehmen und so den Phosphor aus der Asche zurückzugewinnen.

Eine weitere erfindungsgemäße Verwendung der erfindungsgemäßen technischen Anlage sieht die Verwendung dieser Anlage zur Biogasproduktion vor, wobei die Alge Cladophora glomerata aus dem Wasserbecken abgesiebt und in einem Biogasreaktor einer Biogasanlage vergoren wird. Die Alge Cladophora glomerata eignet sich somit vorteilhaft für die Erzeugung von Biogas und damit für die Herstellung eines Energieträgers.

Eine Weiterbildung sieht vor, dass die Biogasproduktion in der Biogasanlage nach 10-30 Tagen beendet wird und die entstandenen Gärreste wieder zur Algenzucht verwendet werden. Somit entsteht auf vorteilhafte Weise ein geschlossener Kreislauf zur Biogasproduktion mithilfe der Alge Cladophora glomerata.

Eine weitere Weiterbildung sieht vor, dass die Vergärung nur unvollständig durchgeführt wird, in dem die Vergärung nach einer Anzahl von Tagen abgebrochen wird und danach die Reste aus dem Biogasreaktor aufgetrennt werden, indem der Inhalt des Biogasreaktors über ein Sieb geschüttet wird, Algenfasern vom Sieb aufgefangen, dann gewaschen und getrocknet oder konserviert werden. Dies ist vorteilhaft für die Herstellung nachwachsender Rohstoffe, indem die Algenfasern zur Herstellung von Produkten, wie z.B. Verpackungsmaterialien, Papierprodukten, Zellulose-Puder für die Pharmaindustrie, etc. verwendet werden.

Eine weitere Weiterbildung der Erfindung sieht vor, dass die Abfallstoffe, die beim Waschen, Trocknen oder Konservieren anfallen, wieder dem Wasserbecken der technischen Anlage zur industriellen Algenzucht und/oder der Vergärung in der Biogasanlage zugeführt werden. Diese Verwendung schafft ein nachhaltiges Konzept der Algenutzung.

Die verschiedenen Verwendungen der erfindungsgemäßen technischen Anlage können jeweils einzeln oder auch in Kombination miteinander sinnvoll eingesetzt werden. So können bspw. die erfindungsgemäße technische Anlage zur industriellen Zucht der Alge Cladophora glomerata und eine Biogasanlage, insbesondere ein Biogasreaktor zu einer Großanlage miteinander verbunden werden. Dabei können bspw. die Gärreste aus dem Biogasreaktor automatisch der erfindungsgemäßen technischen Anlage zur Algenzucht zugeführt werden.

Zudem kann für beide Teilanlagen (Algenzuchtanlage und Biogasreaktor) ein gemeinsames Sieb- und Auffangbeckensystem bereitgestellt sein. Alternativ können beide Teilanlagen an unterschiedlichen Orten betrieben werden, bei denen entweder die Nährstoffe oder die Alge logistisch an den jeweiligen anderen Ort gebracht werden.

Die bei der Zucht der Alge Cladophora glomerata entstehende Algenbiomasse muss nicht notwendigerweise vollständig vergoren werden. Sie kann vielmehr auch ohne Vergärung verwendet bzw. vermarktet werden. Die Alge wird dazu auf einem Sieb geerntet, getrocknet oder konserviert und dann direkt an Kunden geliefert oder weiter verarbeitet.

Die industrielle Zucht der Alge Cladophora glomerata ist zudem vorteilhaft, da diese Alge Kohlendioxid aufnimmt, so dass die Konzentration von Kohlendioxid in der Atmosphäre gesenkt werden kann.

Die Erfindung hat ferner erkannt, dass bereits alleine die Verwendung der Alge Cladophora glomerata zur Abwasserreinigung geeignet ist. Besonders vorteilhaft lässt sich jedoch die Alge Cladophora glomerata zur Abwasserreinigung in einer erfindungsgemäßen technischen Anlage und/oder in Verbindung mit einer der vorliegend beschriebenen erfindungsgemäßen Verwendungen einsetzen.

Weiterbildungen der Erfindung ergeben sich aus den Ansprüchen, der Beschreibung und den Zeichnungen. Die vorgenannten Vorteile von Merkmalen und von Kombinationen mehrerer Merkmale sind beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere aber nicht notwendigerweise den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausgestaltungen der Erfindung oder von Merkmalen unterschiedlicher Ansprüche ist ebenfalls abweichend von den gewählten Rückbeziehungen der Ansprüche möglich und wird hiermit vorgeschlagen. Dies betrifft auch solche Merkmale, die in separaten Zeichnungen dargestellt sind oder bei deren Beschreibung genannt werden. Diese Merkmale können auch mit Merkmalen verschiedener Ansprüche kombiniert werden. Ebenso können in Ansprüchen aufgeführte Merkmale für weitere Ausführungen der Erfindung entfallen.

In der Zeichnung zeigen:
- Fig. 1: ein Ausführungsbeispiel einer erfindungsgemäßen technischen Anlage zur industriellen Zucht der Alge Cladophora glomerata in einer schematisierten Draufsicht und
- Fig. 2: eine perspektivische Darstellung einer dreidimensionalen Struktur zur Verwendung in der in Fig. 1 gezeigten technischen Anlage.

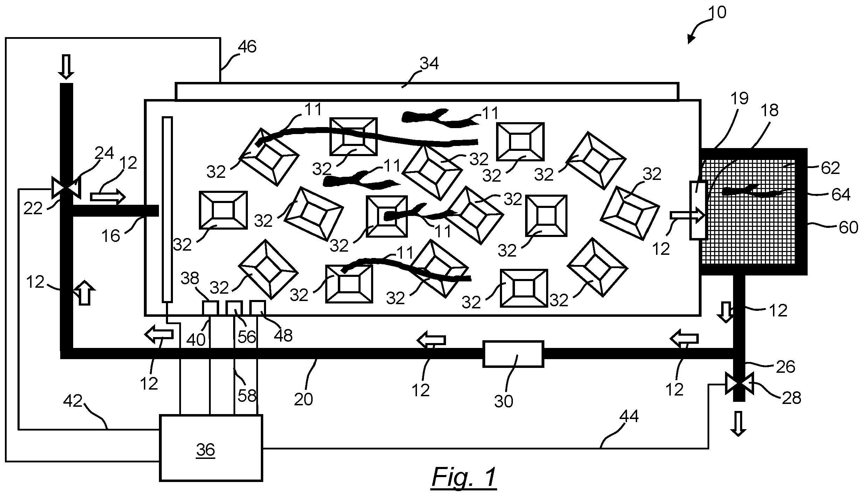

Fig. 1 zeigt ein Ausführungsbeispiel einer erfindungsgemäßen technischen Anlage 10 zur industriellen Zucht der Alge Cladophora glomerata 11. Dieser Anlage 10 weist einen geschlossenen Wasserkreislauf 12 mit einem Wasserbecken 14 zur Zucht der Alge Cladophora glomerata 11 mit einem Wasserzufluss 16 und einen Wasserabfluss 18 mit einer verschließbaren Luke 19 auf. Ein Rücklauf 20 verbindet den Wasserabfluss 18 mit dem Wasserzufluss 16. Außerdem weist der Wasserkreislauf eine Zulaufeinrichtung 22 mit einem absperrbaren Zulauf 24 sowie eine Ablaufeinrichtung 26 mit einem absperrbaren Ablauf 28 auf. Außerdem weist der Wasserkreislauf 12 eine Pumpe 30 auf, die bspw. im Rücklauf 20 angeordnet ist. Mittels dieser Pumpe 30 wird das Wasser vom Wasserabfluss 18 zurück zum Wasserzufluss 16 gepumpt und eine Strömung im Wasserbecken 14 erzeugt.

Die Strömung des Wassers im Wasserbecken 14 weist vorteilhafterweise eine Geschwindigkeit von 0,1-0,5 m/s auf. Die Strömung ist vorzugsweise turbulent. Die Bildung einer solchen turbulenten Strömung wird durch dreidimensionale Strukturen 32 unterstützt, die am Boden des Wasserbeckens 14 angeordnet sind.

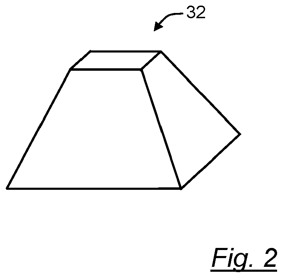

Fig. 2 zeigt ein Beispiel für eine derartige dreidimensionale Struktur 32. Eine solche dreidimensionale Struktur 32 ist demnach vorteilhafterweise als Pyramidenstumpf ausgebildet. Ein solcher Pyramidenstumpf ist vorteilhaft, da er schräge Anströmflächen aufweist, die dafür sorgen, dass das Wasser nach oben sowie zur Seite abgelenkt wird und dabei Turbulenzen im Wasser erzeugt. Alternative Strukturen sind jedoch möglich. Bspw. können statt derartiger Pyramidenstümpfe auch Würfel, Quader oder komplexere Strukturen sowie einfachere Strukturen, wie Kieselsteine, am Boden des Wasserbeckens 14 angeordnet werden.

Fig. 1 zeigt ferner eine Beleuchtungseinrichtung 34 zur photosynthetisch aktiven Beleuchtung des Bodens des Wasserbeckens. Sie kann mehrteilig ausgebildet sein. Die Beleuchtungseinrichtung 34 kann entweder am Boden des Wasserbeckens 14, an den Seitenwänden des Wasserbeckens 14 und/oder an einer nicht dargestellten Abdeckung des Wasserbeckens 14 angeordnet sein. Die Beleuchtungseinrichtung 34 kann bspw. aus einem oder mehreren LED-Streifen bestehen. Vorteilhafterweise entsprechen die Lichtfarbe und das Spektrum des von der Beleuchtungseinrichtung 34 emittierten Lichts dem Tageslicht. Die Beleuchtungseinrichtung 34 ist bezüglich des emittierten Lichts variabel einstellbar, so dass die Beleuchtungsstärke am Boden des Wasserbeckens 14 verändert werden kann.

Die technische Anlage 10 umfasst ferner eine Steuereinrichtung 36 zur Steuerung der Zulaufeinrichtung 22 und/oder der Ablaufeinrichtung 26 derart, dass die Wassertiefe im Wasserbecken 14 in Abhängigkeit von der Trübung des Wassers gesteuert wird. Zu diesem Zweck ist ein Sensor 38 zur Bestimmung der Wassertrübung im Wasserbecken 14 vorgesehen, der mit der Steuereinrichtung 36 über eine elektrische Leitung 40 verbunden ist. Ferner ist die Steuereinrichtung 36 über eine elektrische Leitung 42 mit der Zulaufeinrichtung 22 und über eine elektrische Leitung 44 mit der Ablaufeinrichtung 26 verbunden.

Die Steuereinrichtung 36 ist ferner über eine elektrische Leitung 46 mit der Beleuchtungseinrichtung 34 verbunden. Die Steuereinrichtung 36 ist vorgesehen, um die Beleuchtungseinrichtung 34 derart zu steuern, dass die Beleuchtungsstärke am Boden des Wasserbeckens auf Werte zwischen 3.000 Lux und 9.000 Lux einstellbar ist. Ein Sensor 48 ist am Boden des Wasserbeckens 14 vorgesehen, um die Beleuchtungsstärke zu messen. Dieser Sensor 48 ist über eine elektrische Leitung 50 mit der Steuereinrichtung 36 verbunden.

Die technische Anlage 10 weist ferner eine Heizeinrichtung 52 auf, mittels der das Wasser im Wasserbecken 14 beheizt und in einem Temperaturbereich von 15-25 °C gehalten werden kann. Die Heizeinrichtung 52 wird vorteilhafterweise von der Steuereinrichtung 36 gesteuert und ist daher über eine elektrische Leitung 54 mit der Steuereinrichtung 36 verbunden. Die Steuereinrichtung 36 zudem mit einem im Wasserbecken 14 angeordneten Temperatursensor 56 über eine elektrische Leitung 58 verbunden.

Im Bereich des Wasserabflusses 18 ist ein Auffangbecken 60 mit einem Sieb 62 angeordnet. Dieses Sieb 62 dient zum Auffangen abgerissener Algenfäden 64 der Alge Cladophora glomerata 11.

Die Alge Cladophora glomerata 11 wächst vorzugsweise an den dreidimensionalen Strukturen 32 ebenso wie am rauen bzw. porösen Boden des Wasserbeckens 14 an. In der Strömung bildet die Alge Cladophora glomerata 11 Fäden. So entsteht insgesamt eine große Algenoberfläche, die Nährstoffe sowie Substanzen, wie Phosphor, aus dem Wasser aufnehmen kann.

Bspw. kann in das Wasserbecken 14 Klärschlammasche eingestreut werden, die bei der Verbrennung von Klärschlamm entsteht. Derartige Klärschlammasche verbleibt im Wesentlichen ortsfest am Boden des Wasserbeckens 14. Sie ist typischerweise mit Phosphor belastet. Dieses Phosphor wird im Wasser gelöst und die Alge Cladophora glomerata 11 nimmt das Phosphor anschließend aus dem Wasser auf. Die Alge Cladophora glomerata 11 kann nach einiger Zeit aus dem Wasser entnommen und anschließend das Phosphor aus der Alge zurück gewonnen werden.

Außerdem kann bei der Klärschlammverwertung anfallendes Brüdenkondensat pur oder verdünnt in das Wasser im Wasserbecken 14 zugegeben werden. Die im Brüdenkondensat enthaltenen Substanzen werden ebenfalls von der Alge Cladophora glomerata 11 aufgenommen, so dass eine Reinigung des Brüdenkondensats erfolgt. Brüdenkondensat kann schließlich nach einer derartigen Reinigung dem Abwasser zugeführt werden.

Die auf diese Weise im Wasserbecken 14 gezüchtete Alge Cladophora glomerata 11 kann mittels des Siebs 62 oder auf andere Weise abgesiebt und anschließend in einem Biogasreaktor einer Biogasanlage vergoren werden. Die bei der Biogaserzeugung entstehenden Gärreste können wieder dem Wasserkreislauf 12 zugeführt und zur Algenzucht verwendet werden.

Die Vergärung der Alge Cladophora glomerata im Biogasreaktor einer Biogasanlage erfolgt vorteilhafterweise nur unvollständig, indem der Prozess der Vergärung nach wenigen Tagen abgebrochen wird und danach die Gärreste aus dem Biogasreaktor aufgetrennt werden, indem der Inhalt des Biogasreaktors über ein Sieb geschüttet wird, Algenfasern vom Sieb aufgefangen, dann gewaschen und getrocknet oder konserviert werden. Hierbei entsteht ein nachwachsender Rohstoff, der bspw. als Verpackungsmaterial, in Papierprodukten, als Cellulose-Puder für die Pharmaindustrie oder in anderen Anwendungen verwendet werden kann.

Andere Abfallstoffe, die beim Waschen, Trocknen oder Konservieren der Alge Cladophora glomerata anfallen, werden wieder dem Wasserbecken 14 der technischen Anlage 10 zur industriellen Algenzucht oder der Vergärung in der Biogasanlage zugeführt.

Insgesamt ermöglicht die Erfindung somit ein nachhaltiges Konzept der Nutzung der Alge Cladophora glomerata.

In den Figuren werden folgende Bezugsziffern verwendet:
- 10: technische Anlage zur industriellen Zucht der Alge Cladophora glomerata
- 11: Alge Cladophora glomerata
- 12: Wasserkreislauf
- 14: Wasserbecken
- 16: Wasserzufluss
- 18: Wasserabfluss
- 19: verschließbare Luke
- 20: Rücklauf
- 22: Zulaufeinrichtung
- 24: absperrbarer Zulauf
- 26: Ablaufeinrichtung
- 28: absperrbarer Ablauf
- 30: Pumpe
- 32: dreidimensionale Struktur
- 34: Beleuchtungseinrichtung
- 36: Steuereinrichtung
- 38: Sensor zur Bestimmung der Wassertrübung
- 40: elektrische Leitung
- 42: elektrische Leitung
- 44: elektrische Leitung
- 46: elektrische Leitung
- 48: Sensor zur Bestimmung der Beleuchtungsstärke
- 50: elektrische Leitung
- 52: Heizeinrichtung
- 54: elektrische Leitung
- 56: Temperatursensor
- 58: elektrische Leitungen
- 60: Auffangbecken
- 62: Sieb
- 64: Algenfasern der Alge Cladophora glomerata

## Patentansprüche

1. Technische Anlage zur industriellen Zucht der Alge Cladophora glomerata (11),
**gekennzeichnet durch**
einen Wasserkreislauf (12) mit wenigstens einem mit Wasser befüllten Wasserbecken (14), vorzugsweise einem Betonbecken, in dem die Alge Cladophora glomerata (11) gezüchtet wird und das einen Wasserzufluss (16) und einen Wasserabfluss (18) aufweist,
wobei der Wasserkreislauf (14) eine Zulaufeinrichtung (22) mit einem absperrbaren Zulauf (24), eine Ablaufeinrichtung (26) mit einem absperrbaren Ablauf (28) und einen Rücklauf (20) aufweist, der den Wasserabfluss (18) mit dem Wasserzufluss (16) verbindet und der eine Pumpe (30) aufweist, mittels der eine, vorzugsweise turbulente, Strömung des Wassers im Wasserbecken (14) erzeugt wird,
und durch eine Beleuchtungseinrichtung (34) zur photosynthetisch aktive Beleuchtung des Bodens des Wasserbeckens (14).

2. Anlage nach Anspruch 1,
**gekennzeichnet durch**
dreidimensionale Strukturen (32) am Boden des Wasserbeckens (14).

3. Anlage nach Anspruch 1 oder 2,
**gekennzeichnet durch**
einer maximalen Wassertiefe von 15-50 cm im Wasserbecken (14).

4. Anlage nach Anspruch 3,
**gekennzeichnet durch**
eine Steuereinrichtung (36) zur Steuerung der Zulaufeinrichtung (22) und/oder Ablaufeinrichtung (26) derart, dass die Wassertiefe im Wasserbecken (14) in Abhängigkeit von der Trübung des Wassers gesteuert wird.

5. Anlage nach Anspruch 4,
**dadurch gekennzeichnet, dass**
die Beleuchtungseinrichtung (34) variabel einstellbar und von der Steuereinrichtung (36) derart gesteuert ist, dass die Beleuchtungsstärke am Boden des Wasserbeckens (14) auf Werte zwischen 3.000 Lux und 9.000 Lux einstellbar ist.

6. Anlage nach einem der vorhergehenden Ansprüche,
**dadurch gekennzeichnet, dass**
das Wasserbecken (14) eine Abdeckung aufweist.

7. Anlage nach einem der vorhergehenden Ansprüche,
**dadurch gekennzeichnet, dass**
das Wasserbecken (14) eine Heizeinrichtung (52) zum Beheizen des Wassers aufweist.

8. Anlage nach einem der vorhergehenden Ansprüche,
**dadurch gekennzeichnet, dass**
mehrere Wasserbecken (14) übereinander angeordnet sind.

9. Anlage nach einem der vorhergehenden Ansprüche,
**dadurch gekennzeichnet, dass**
am Wasserabfluss (18) des bzw. jedes Wasserbeckens (14) ein Auffangbecken (60) mit einem Sieb (62) angeordnet ist, auf dem sich lose treibende Algen ansammeln.

10. Verwendung der technischen Anlage (10) nach einem der Ansprüche 1 bis 9 zur Abwasserreinigung in Kläranlagen, wobei über die Zulaufeinrichtung (22) Abwasser zugeführt wird.

11. Verwendung nach Anspruch 10, wobei die technische Anlage (10) als weitere Reinigungsstufe einer mehrstufigen Kläranlage, bspw. einer Kläranlage mit einer mechanischen Reinigungsstufe, einer biologischen Reinigungsstufe ohne gezielte Entfernung von Nährstoffen, wie Phosphaten und Stickstoff, und/oder einer weiteren biologischen Reinigungsstufe mit gezielter Entfernung derartiger Nährstoffe, verwendet wird.

12. Verwendung der technischen Anlage (10) nach einem der Ansprüche 1 bis 9 zur Entsorgung von Brüdenkondensat, das aus der Klärschlammverwertung stammt, vorzugsweise in Verbindung mit einer Verwendung nach einem der Ansprüche 10 oder 11, wobei das Brüdenkondensat dem Wasserbecken (14) zugeführt wird.

13. Verwendung der technischen Anlage (10) nach einem der Ansprüche 1 bis 9 zur Reinigung von Klärschlammasche, die bei der Verbrennung von Klärschlamm entsteht, vorzugsweise i.V.m. einer Verwendung nach einem der Ansprüche 10 bis 12, wobei die Klärschlammasche in das Wasserbecken (14) gegeben wird.

14. Verwendung der technischen Anlage (10) nach einem der Ansprüche 1 bis 9 zur Phosphorrückgewinnung aus Klärschlammasche, die bei der Verbrennung von Klärschlamm entsteht, vorzugsweise i.V.m. einer Verwendung nach einem der Ansprüche 10 bis 13, wobei die Klärschlammasche in das Wasserbecken (14) gegeben wird.

15. Verwendung der technischen Anlage (10) nach einem der Ansprüche 1 bis 9 zur Biogasproduktion, vorzugsweise i.V.m. einer Verwendung nach einem der Ansprüche 10-14, wobei die Alge Cladophora glomerata (11) aus dem Wasserbecken (14) abgesiebt und in einem Biogasreaktor einer Biogasanlage vergoren wird.

16. Verwendung nach Anspruch 15, wobei die Biogasproduktion in der Biogasanlage nach 10-30 Tagen beendet wird und die entstandenen Gärreste wieder zur Algenzucht verwendet werden.

17. Verwendung nach Anspruch 15, wobei die Vergärung nur unvollständig durchgeführt wird, indem die Vergärung nach einer Anzahl von Tagen abgebrochen wird und danach die Reste aus dem Biogasreaktor aufgetrennt werden, indem der Inhalt des Biogasreaktors über ein Sieb geschüttet wird, Algenfasern vom Sieb aufgefangen, dann gewaschen und getrocknet oder konserviert werden.

18. Verwendung nach Anspruch 17, wobei die Abfallstoffe, die beim Waschen, Trocknen oder Konservieren anfallen, wieder dem Wasserbecken (14) der technischen Anlage (10) zur industriellen Algenzucht und/oder der Vergärung in der Biogasanlage zugeführt werden.

19. Verwendung der Alge Cladophora glomerata zur Abwasserreinigung, insbesondere in einer technischen Anlage nach einem der Ansprüche 1 bis 9 und/oder i.V.m. einer Verwendung nach einem der Ansprüche 10 bis 18.
